(19) Europäisches Patentamt
European Patent Office
Office européen des brevets

(11) Publication number: 0 327 054 A2

(12) # EUROPEAN PATENT APPLICATION

(21) Application number: 89101706.3

(22) Date of filing: 01.02.89

(51) Int. Cl.4: G02F 1/137 , C09K 19/20 , G09G 3/36

(30) Priority: 03.02.88 JP 21975/88

(43) Date of publication of application: 09.08.89 Bulletin 89/32

(84) Designated Contracting States: DE FR GB NL

(71) Applicant: HITACHI, LTD.
6, Kanda Surugadai 4-chome Chiyoda-ku
Tokyo(JP)

(72) Inventor: Kondo, Katsumi
19-21, Aobacho
Katsuta-shi(JP)
Inventor: Kitamura, Teruo
3600-234, Nakane
Katsuta-shi(JP)
Inventor: Yokokura, Hisao
10-1, Higashinarusawacho-2-chome
Hitachi-shi(JP)
Inventor: Iwasaki, Kishiro
1288, Kamezakucho
Hitachiota-shi(JP)
Inventor: Hanawa, Yasuo
45-12, Taiseicho
Katsuta-shi(JP)
Inventor: Nakata, Tadao
212-123, Koya
Katsuta-shi(JP)
Inventor: Mukoh, Akio
498-21, Kasaharacho
Mito-shi(JP)

(74) Representative: Patentanwälte Beetz sen. - Beetz jun. Timpe - Siegfried - Schmitt-Fumian
Steinsdorfstrasse 10
D-8000 München 22(DE)

(54) **Liquid crystal light modulating device and method for driving the same.**

(57) There is disclosed a liquid crystal light modulating device in which a ferroelectric liquid crystal composition comprising three or more liquid crystal compounds; at least two of said compounds having mutually reverse directions (senses) of the spontaneous twist of molecular major axis in the same layer of smectic phase is used: and the method of driving the same is also disclosed.

EP 0 327 054 A2

# LIQUID CRYSTAL LIGHT MODULATING DEVICE AND METHOD FOR DRIVING THE SAME

## BACKGROUND OF THE INVENTION

### FIELD OF THE INVENTION

This invention relates to an optical modulator using a ferroelectric liquid crystal composition and particularly it relates to an optical modulator suitable for matrix driving and a liquid crystal composition for said modulator.

### DISCUSSION ON RELATED ART

IT is well known that when a ferroelectric liquid crystal is placed in a thin cell having a gap of about 1-2 µm, electrooptical memory properties accompanying the bistability of molecular orientation are developed [Jap. Pat. Appln. Kokai (Laid-open) No. 56-107216, U.S. Patent 4367923, Applied Physics Letters 36 (1980) 899-901, etc.]. As a method for developing memory properties in a cell having a thicker gap, there has been proposed a method using a compound which undergoes direct phase transition from cholesteric (Ch phase) to smectic C* phase (Sc* phase) and has a large telt angle (Japan Display 86, Lecture No. 12.5).

It is described in U.S. Patent 4,615,586 that in a ferroelectric liquid crystal display device, there is used a mixture of compounds whose senses of twist of helix in each layer are reverse to each other. The employment of the mixture is effective in loosening the helix formed between layers of smectic phase, but even when the helix disappears, in the case where twist of director occurs in one layer (referred to as "in the same layer") of smectic phase, memory properties cannot be attained only by loosing the helix. It is difficult to attain memory properties particularly in the case of a cell of practical use having a relatively large cell gap in which the possibility of occurrence of twist in the same layer is high.

That is, if there is provided a liquid crystal light modulating device which permits certain attainment of memory properties even in a thick cell, it becomes possible to produce various display devices in high yield by using an existing production line.

In the above prior arts, materials having a large telt angle are used, but memory properties are not always developed only by using these materials.

For example, in the case where a composition consisting of compounds with a relatively large telt angle (35°) represented by the structural formulas (1) and (2) shown below, in proportions of (1) and (2) of 40 mole% and 60 mole%, respectively, is sealed in substrates provided with NESA electrodes, when the cell gap is in the range of 2 to 12 µm, the liquid crystal molecular major axis direction (unit vector representing the liquid crystal molecular major axis direction: referred to as director) is in twisted state, so that there cannot attained a state in which the directions (senses) of spontaneous twist of molecular major axis in the same layer are the same (referred to as "uniform state"). Therefore, no memory properties appear.

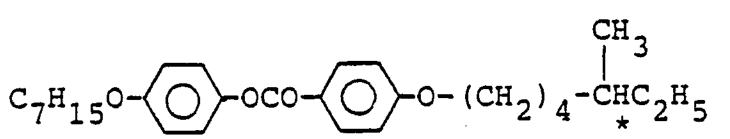
(1)

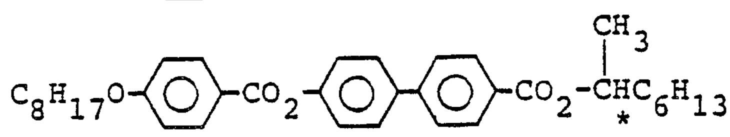
(2)

The above term "twisted state" in the same layer means a state shown in (a) or (b) in Fig. 1, in which in one layer (in the same layer) of smectic phase, the direction of director 1 twist clockwise [or counterclockwise in (b)] little by little from the upper substrate surface parallel to the paper surface to the lower substrate surface, resulting in the direction represented by director 2 on the lower substrate surface. The term "uniform state" means a state shown in (c) or (d) in Fig. 1, in which no twist exists.

When the above twisted state is observed from the spontaneous polarization vector of liquid crystal molecule, in the twisted state, the direction of said vector of each liquid crystal in the same layer show, as a

whole, a fan-shaped (spray) state.

From the above experimental results, we conjecture that physical properties values other than the telt angle are concerned in memory properties. That is, all about factors governing memory properties has not yet been known until today.

When simple matrix driving is attempted in practice, memory state is shown when applied voltage is zero, but the written memory state often disappear owing to bias voltage applied during nonselective period.

## SUMMARY OF THE INVENTION

The first aspect of this invention is directed to a liquid crystal light modulating device of matrix display type which is excellent in memory properties and bias resistance. Particularly, it is directed to a liquid crystal light modulating device using substrates having a practical cell gap between them which is excellent in memory properties and bias resistance.

The second aspect of this invention is directed to a liquid crystal composition for the aforesaid matrix-type liquid crystal light modulating device.

## BRIEF DESCRIPTION OF THE DRAWINGS

Fig. 1(a) and (b) show the clockwise-twisted state and the counterclockwise-twisted state, respectively, of director in the case where the upper and lower boundary surfaces are parallel to the paper surface.

Fig. 1(c) and (d) are schematic views showing the uniform states.

Fig. 2 (a) is an applied voltage waveform used for evaluating electrooptical memory properties, and Fig. 2(b) shows one example of optical response in the case of this evaluation.

Fig. 3(a) is an applied voltage waveform for evaluating bias resistance, and Fig. 3(b) shows one example of optical response in the case of this evaluation.

Fig. 4 is an illustrative view of the present light-modulating device.

1 ... director on the upper boundary surface, 2 ... director on the lower boundary surface, 3 ... the surface of a smectic layer.

## DETAILED DESCRIPTION OF PREFERRED EMBODIMENT

The ferroelectric liquid crystal composition of the present invention is characterized in that

(1) it comprises at least three liquid crystalline compounds,

(2) at least two of said crystalline compounds have mutually reverse directions (senses) of spontaneous twist of molecular major axis in one layer of a smectic layer formed by the liquid crystal composition, and

(3) under an electric field lower than the threshold value for the liquid crystal composition, the molecular major axis of the two compounds in the above same layer are not in the twisted state but in the same direction.

As the liquid crystalline compounds used in this invention, any compounds may be used so long as they satisfy the above requirements, and said liquid crystalline compounds need not necessarily be liquid crystals.

The aforesaid composition is explained below in detail in terms of the occurrence of twist.

The cause of occurrence of the twisted state has heretofore been considered to be correlated to the interaction between the spontaneous polarization of liquid crystal molecules and the interfacial polarization of a substrate. In detail, it has been considered that owing to this interaction, the spontaneous polarizations at the upper and lower substrates are oriented in directions reverse to each other (inversely parallel), resulting in occurrence of twist of director.

However, for example, also when a compound of the structure shown below having a spontaneous polarization of substantially zero (spontaneous polarization: Ps $< 0.1 nC/cm^2$) was sealed in a cell formed by placing, face to face with each other, electrodes having no coating on the surface and provided with NESA

electrodes, namely, also when there was produced an element in which the interaction between the polarization of substrates and the spontaneous polarization of liquid crystal molecules (the dipole-dipole interaction) is substantially zero, a stable twisted state [see Fig. 1(a) or (b)] was observed.

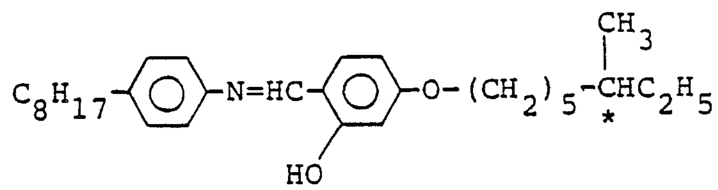

This experimental result indicates that the cause of the occurrence of the twisted state is not based on the above-mentioned dipole-dipole interaction.

This indicates that there exists another cause of the intermolecular interaction responsible for the occurrence of twist. The following interpretation is possible. Since liquid crystal molecules are unsymmetrical (there have no symmetry center because of the presence of an asymmetric carbon atom) and a dipole moment is present in the molecular minor axis direction, the twisted state is more stable than the uniform state.

Accordingly, in order to find a liquid crystal composition which weakens the intermolecular interaction responsible for the occurrence of the twisted state and imparts more stable memory properties, the present inventors earnestly investigated on the basis of the above finding and consequently found that a composition comprising at least three liquid crystalline compounds at least two of which have mutually reverse senses of spontaneous twist can reduce the face causing a twist, whereby the present invention was accomplished.

When liquid crystalline compounds having mutually reverse senses of spontaneous twist are mixed, the twisted state first becomes unstable, and then the energy of the uniform state more bistable than the twisted state becomes lower than that of the twisted state, resulting in shift in the direction of stability, namely, shift to the uniform state.

As the liquid crystalline compounds which show mutually reverse directions (senses) of spontaneous twist of molecular major axis in one layer (in the same layer) of smectic phase formed by the aforesaid liquid crystal composition, there may be used, for example, mutual antipodes. Needless to say, compounds different in chemical structure can also be used so long as their senses of spontaneous twist are reverse to each other. In this case, it is not always necessary to maintain a complete balance between the twisting forces, and it is sufficient that the two compounds are blended in a range in which a substantially uniform state is formed in a cell. Although not critical, the content of compounds having mutually reverse senses of spontaneous twist in the aforesaid composition is chosen in the range in which when said composition is sealed in a cell, a substantially uniform state can be attained.

As the compounds usable in this invention, it is, as described above, not always necessary to use liquid crystals, and any compounds may be used without particular restriction so long as they satisfy the requirements of (2) and (3) above.

As combination of the compounds having mutually reverse senses of spontaneous twist of molecular major axis in one layer of smectic phase, there may be exemplified combinations of compounds selected from, for example, compounds represented by the general formula [I] shown below; optically active carboxylic acid derivatives already disclosed as ferroelectric compounds (e.g., Jap. Pat. Appln. Kokai (Laid-Open) Nos. 61-165350, 59-219251, 61-43, 61-22051, 61-63633, 61-210056, 60-149547, 62-198647, and 62-46), and the compounds disclosed in USSN 201877, a pending application filed on June 3, 1988 and was assigned to HITACHI LTD. and Sumitomo Chemical Company, LIMITED.

Needless to say, the compounds used in combination are not limited to those described above, and may be any compounds so long as they satisfy the requirements of (2) and (3) above.

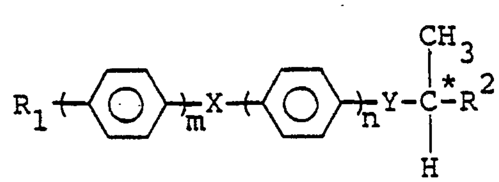

[I]

wherein $R^1$ is an alkyl or alkoxy group having 6 to 10 carbon atoms, $R^2$ is an alkyl group having 4 to 10 carbon atoms, X is $-CO_2-$, -OCO-, or $-CH_2O-$, Y is -O-, $-CO_2-$, or $-(CH_2)_\ell-$ ($\ell$ is an integer of 1 to 5), and each of m and n is an integer of 1 or 2. The phenyl groups are optionally substituted by a halogen atom.

Compounds used in addition to those used in the combinations exemplified above may be any compounds so long as they do not prevent the satisfication of the requirements of (2) and (3) above. For example, there may be used the aforesaid compound:

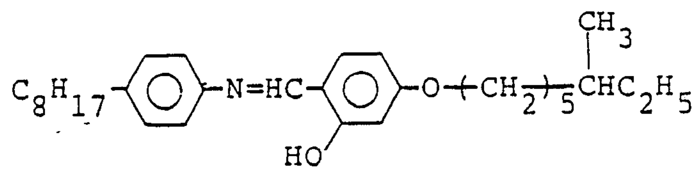

However, usually, they are optionally selected from the above-mentioned various carboxylic acid derivatives, and the like. The content of said compounds in the composition is not critical, and said compounds are used in an amount range in which they do not prevent the satisfication of the requirements of (1) to (3) above.

The liquid crystal light modulating device, i.e., the first aspect of this invention can be produced by sealing the aforesaid composition in a cell for liquid crystal by a conventional method.

That is, there is provided a liquid crystal light modulating device comprising a cell composed of a pair of substrates at least one of which is transparent, matrix electrodes provided on the substrate surfaces facing each other, and a spacer forming a gap in combination with the substrates; and a ferroelectric liquid crystal composition comprising three or more liquid crystalline compounds which is held between the substrates, at least two of said compounds exhibiting mutually reverse directions (senses) of spontaneous twist of molecular major axis in one layer of a smectic phase formed by the liquid crystal composition, and the molecular major axes of the two compounds in the above same layer being not in twisted state but in substantially the same direction, under an electric field lower than the threshold value for said liquid crystal composition.

In the aforesaid device, as the ferroelectric liquid crystal composition, there is preferably used a composition at least two components of which are compounds exhibiting mutually reverse directions (senses) of spontaneous twist of molecular major axis in one layer of a smectic phase formed by the composition, and satisfy the formula: $q < Q$ wherein q is the magnitude of spontaneous polarization of said compounds, and Q is the magnitude of spontaneous polarization of the ferroelectric liquid crystal composition.

In addition, the magnitude of spontaneous polarization of said ferroelectric liquid crystal composition is preferably $7 nC/cm^2$ or more.

As the aforesaid light modulating device, one which has a gap between the substrates of 4 $\mu m$ or more can be used more advantageously.

Furthermore, as the aforesaid ferroelectric liquid crystal composition, there is preferably used one which comprises three or more liquid crystalline compounds at least two of which are mutual antipodes.

The above-mentioned liquid crystal light modulating device of matrix display type does not lose its memory properties when a bias voltage is applied at the time of time-sharing driving in matrix display. Because of no loss of the memory properties, said device is excellent particularly as a light modulating device for large matrix display devices having a large number of picture elements.

The aforesaid light modulating device may be driven by any method. For example, there may be employed a driving method in which a voltage applied to the aforesaid ferroelectric liquid crystal composition has a pulse voltage waveform, and the following relation is allowed to hold:

$V_0 \geq V_{TH} > V$

wherein $V_{TH}$ is the threshold voltage of the liquid crystal composition. $V_0$ is a pulse voltage for switching, and V is a pulse voltage applied during a period in which switching condition is maintained. There may also be used a driving method in which a voltage applied to the ferroelectric liquid crystal composition has a pulse voltage waveform, and when a pulse voltage for subjecting the liquid crystal composition to switching is taken as $V_0$ and a pulse duration as $\tau$, a pulse area applied during a period in which switching condition is maintained is $V_0 \bullet \tau/3$ or less.

The display element of the present invention is characterized in that it does not lose memory properties even when a bias voltage indispensable in a matrix-type display method in which time-sharing driving is

conducted, is higher than that employed in the case of a conventional ferroelectric liquid crystal. That is, in spite of the application of a bias voltage which is unavoidable in conducting matrix-type display by time-sharing driving, the device of the present invention can retain a memory state. When a high bias is applied, the switching speed of liquid crystal can be increased. That is, in the case where the number of picture elements of display device is the same, the application of a high bias makes it possible to provide a display device whose response speed is higher than that of conventional ones. In the above methods, the magnitude of a bias for increasing the switching speed efficiently is specified.

In the case of simple matrix driving, when attention is given to each picture element, the driving period can be divided into a writing period in which switching is conducted, and a period in which the data thus recorded are retained. Even in the retaining period, a voltage pulse above a definite level is applied, and therefore the driving is impossible without threshold value characteristics which are steep to a certain extent.

According to the present invention, switching occurs from the uniform state (not via the twisted state), the threshold value is steeper, so that the driving becomes easy. In detail, in the uniform state, the torque (the force to cause switching of liquid crystal molecules) generaged at the time of application of voltage is small, and the torque is theoretically zero when it is assumed that neither thermal perturbation nor disorder of orientation occurs. However, when switching begins, the torque increases gradually, resulting in rapid response. On the other hand, when twist tends to occur, application of a slight voltage first causes shift to the twisted state. In the twisted state, there surely exists a region where the applied electric field direction and the spontaneous polarization are substantially perpendicular to each other and the torque is the largest. Therefore, switching further proceeds easily, resulting in the uniform state. Thus, in the case of a composition in which twist tends to occur, no steep threshold value characteristics can be attained.

## EXAMPLES

Examples of the present invention are described below. Memory properties were evaluated by adding 3% by weight of a dichromatic dye (LCD-235, mfd. by Mitsubishi Chemical Industries Ltd.) to each composition. A waveform composed, as shown in Fig. 2, a pulse voltage of 30 volts having a pulse duration of 2 milliseconds, whose polarity was alternately inverted with a zero volt period of 200 milliseconds, was applied to an element equipped with a deflector plate. In synchronism with the waveform, the intense of light transmitted by the element (brightness T) was, as shown in Fig. 2, measured at the four points ($T_1$ through $T_4$), and for convenience, whether the memory properties (M) were good or not was judged by the equation shown below. As a light source, one which emitted monochromatic light having a wavelength of 625 nm was used.

$$M = (T_3/T_2-1)/(T_4/T_1-1)$$

According to the above definition, the larger M value means the higher memory properties, and the maximum and minimum values of M are 1 and 0, respectively. The axial direction of the polarizer plate was set so that $T_4/T_1$ had a maximum. The applied voltage of 30 volts is sufficient for subjecting the crystal liquid to complete switching.

Bias resistance was evaluated by measuring the contrast ratio after application of the bias waveform composed of 400 pulses shown in Fig. 3 to the element used for the measurement of memory properties.

The sense of twist of a single compound was determined by the following procedure. First, the single liquid crystal was placed in a wedge-shaped cell having transparent electrodes, heated to isotropic phase, and then cooled gradually to ferroelectric smectic C* phase. In particular, after smectic C* phase had been attained, the single liquid crystal was cooled at a very slow speed of about 0.1° C/min. Then, it was observed under a polarization microscope. In this case, an interference filter was inserted between a light source and the cell, and the optical rotary power was observed using monochromatic light. In a region in which the cell was thick to a certain extent (about 5 µm or more), when an analyzer was rotated clockwise or counterclockwise by about twice the telt angle of the liquid crystal from the orthogonal state, the visual field became dark. From the direction of rotation in this case, there was judged whether the optical rotary power was dextrarotary or levorotary, namely, whether the sense of twist is crockwise or counterclockwise.

### Example 1

The five compounds shown below were mixed to prepare a parent composition. The sense of twist of said composition was crockwise. But, the absolute configurations of the individual compounds were the

same.

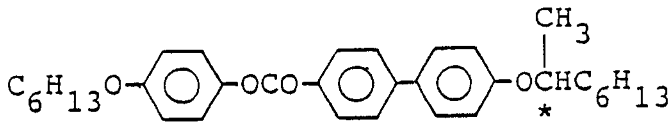

(19 wt%)

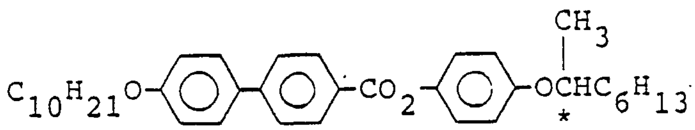

78nC

(19 wt%)

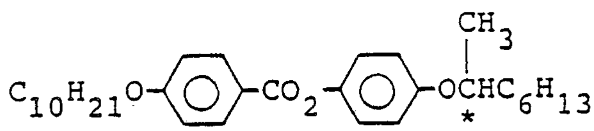

(19 wt%)

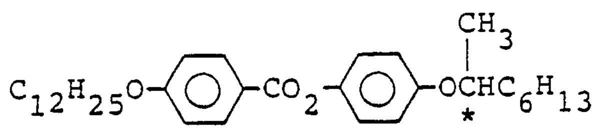

(19 wt%)

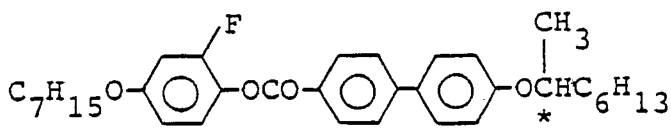

(24 wt%)

Next, compositions [I] and [II] were prepared by blending the parent composition with 8% by weight or 16% by weight, respectively, of the compound shown below whose absolute configuration around the asymmetric carbon atom was that of the antipode of the compound having the above absolute configuration and whose sense of twist was clockwise.

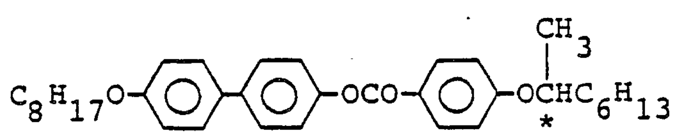

43nC

The phase transition temperatures of the composition [I] thus obtained were as follows and its spontaneous polarization was 92nC/cm$^2$;

$$S_X \xrightarrow{11^\circ C} S_{C*} \xrightarrow{67^\circ C} S_A \xrightarrow{76^\circ C} I_{SO}$$

Subsequently, 3% by weight of the aforesaid dichromatic dye was added to each of said compositions, and the resulting mixture was packed into three kinds of cells which had a gap of 4.0 µm, 8.0 µm and 12.3 µm, respecitvley, and a polyimide coating on the surface and had been subjected to parallel-rubbing treatment. In each cell, satisfactory electrooptical memory properties were observed at 22° C, and the value of M was 1.0 for both [I] and [II]. The contrast ratio $T_3/T_2$ during memory state was 7.4 for [I] and 5.8 for [II] in the cell having a gap of 8.0 µm. Then, the bias waveform shown in Fig. 3 was applied, after which the

contrast ratio $T_3/T_2$ at the time when no electric field was applied was measured. Consequently, the contrast ratio was decreased very slightly. For example, in the case of 8 µm gap, values of the contrast ratio of 6.7 and 2.0 were obtained for [I] and [II], respectivley. Thus, it was confirmed that the devices obtained in the case of 8 µm gap had a bias resistance sufficient for practical purposes.

Comparative Example 1

A composition was prepared by adding 8% by weight of the compound shown below whose sense of twist was counterclockwise to the same five parent liquid crystals as in Example 1.

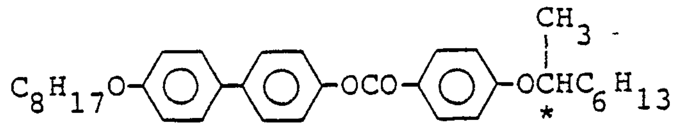 (R-form)

The phase transistor temperatures of the composition thus obtained were substantially the same as in Example 1, and its spontaneous polarization was 74nC/cm².

Electrooptical memory properties were measured under the same conditions as in Example 1 to find that the value of M was decreased so much that it was 0.43 when the gap was 8 µm in width. In this case, the contrast ratio $T_3'/T_2'$ in the case where the gap was 8.0 µm in width was 3.8 during memory state, but after application of bias waveform, it became 1.6 and the memory properties were almost lost owing to the bias waveform application.

It was also found that when a bias voltage of 7 V or more was applied, the memory properties were lost.

Example 2

A composition was prepared by adding 8% by weight each of levo and dextro isomers of the compound shown below which were mutual antipodes, to the same five parent liquid crystals as in Example 1.

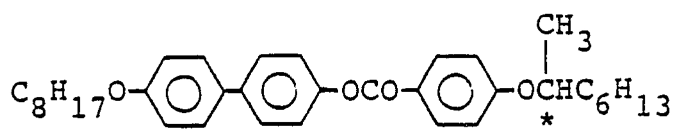 (R-form)

(spontaneous polarization 43nC/cm²)

The phase transition temperatures of the composition thus obtained were as follows:

$$S_X \overset{11°C}{-} S_{C*} \overset{71°C}{-} S_A \overset{77°C}{-} I_{SO}$$

The value of spontaneous polarization was 87nC/cm². When electrooptical memory properties were measured under the same conditions as in Example 1 and Comparative Example 1, satisfactory memory properties were observed, and the value of M was 1.0 when the gap was in the range of 4.0 to 13.5 µm. A decrease of the contrast ratio caused by the application of bias waveform was very slight. For example, when the gap was 7.8 µm in width, the contrast ratio was 7.8 when no bias was applied, while it was 6.9 after bias application.

Example 3

In place of the isomers of the two compounds shown below used in the parent composition in Example

1, there were used isomers of the two compounds whose sense of twist was clockwise in contrast with the isomers used in Example 1:

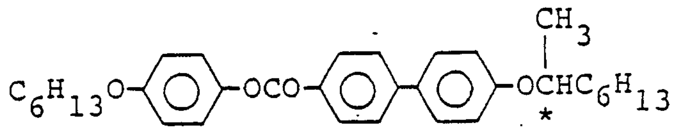 (R-form)

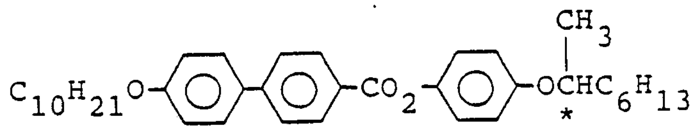 (R-form)

The following compound shown in Example 1 was added to the above isomers in an amount of 4% by weight:

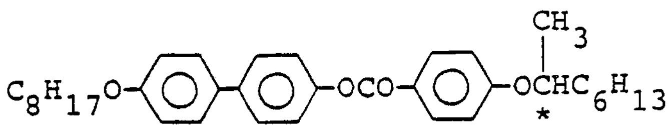

The spontaneous polarization of the resulting composition was 16nC/cm². For this composition, satisfactory memory properties were observed in three kinds of cell having a gap of 4.0 µm, 8.1 µm and 11.8 µm, respectively.

Comparative Example 2

To the parent composition obtained in Example 3 was added 8% by weight of the compound:

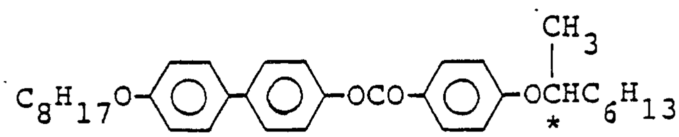

The spontaneous polarization of the resulting composition was 7nC/cm². For this composition, memory properties were measured in three kinds of cells having a gap of 4.0 µm, 7.8 µm and 12.3 µm, respectively, to find that the M value was less than 0.5 in all the cells.

According to the present invention, there can be obtained a matrix device which has more stable memory properties and bias resistance in a practical gap region of 4 µm or more. Therefore, the present invention is industrially very advantageous.

## Claims

1. A liquid crystal light modulating device comprising
a cell composed of a pair of substrates at least one of which is transparent, matrix electrodes provided on the substrate surfaces facing to each other, and a spacer forming a gap in combination with the pair of the substrates, and
a ferroelectric liquid crystal composition comprising three or more liquid crystalline compounds which is held between the substrates, at least two of said compounds having mutually reverse directions (senses) of spontaneous twist of molecular major axis in the same layer of smectic phase.

2. A device according to Claim 1, wherein said composition can satisfy the following relationship:
$q < Q$
wherein q is the magnitude of spontaneous polarization of the compounds the aforesaid senses of which are reverse to each other, and Q is the magnitude of spontaneous polarization of the composition itself.

3. A device according to Claim 1 or 2, wherein the magnitude of spontaneous polarization of said compositions is more than 7 $nC/cm^2$.

4. A device according to any one of Claims 1 to 3, wherein said gap has a width of 4 µm or more.

5. A device according to any one of Claims 1 to 4, wherein said compounds having mutually reverse senses are mutual antipodes.

6. A method for driving the device claimed in any one of Claims 1 to 5, in which
a voltage waveform applied to the ferroelectric liquid composition is a pulse voltage, and
the device is driven so that the following relation can be satisfied:
$V_O \geqq V_{TH} > V$
wherein $V_{TH}$ is the threshold voltage of said composition, $V_O$ is a pulse voltage for switching, and V is a pulse voltage applied during a period in which switching condition is maintained.

7. A method for driving the device claimed in any one of Claims 1 to 5, in which
a voltage waveform applied to said ferroelectric liquid crystal composition is a pulse voltage, and
the device is driven so that when a pulse voltage for subjecting said liquid crystal composition to switching is taken as $V_O$ and the pulse duration as $\tau$, the pulse area applied during a period in which switching condition is maintained is $V_O \bullet \tau/3$ or less.

FIG. 1

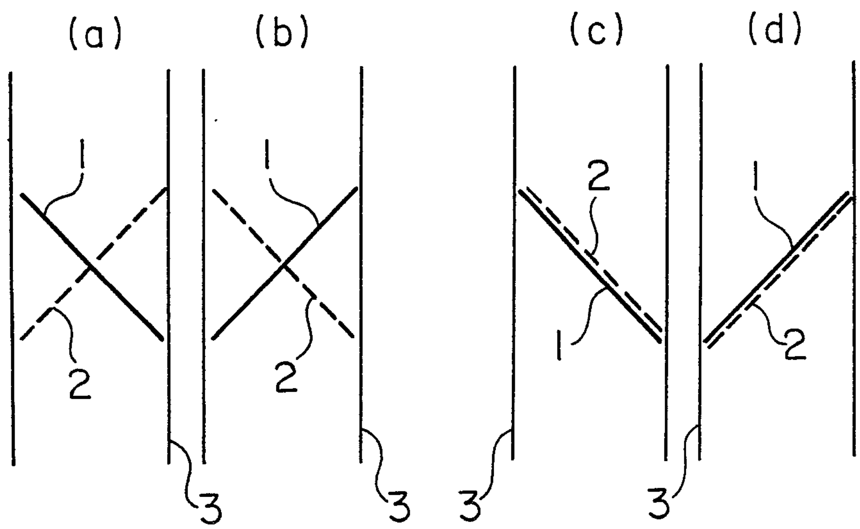
(a)
(b)
(c)
(d)
1
2
3

FIG. 2

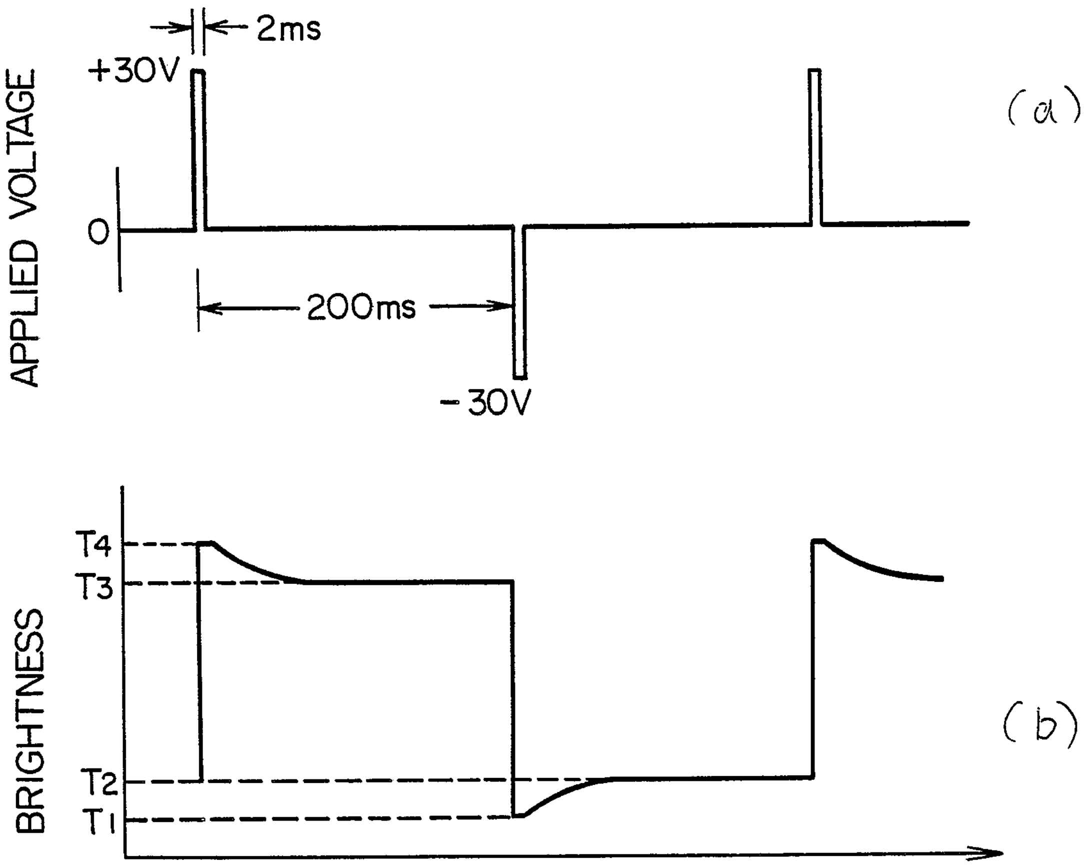
2ms
+30V
APPLIED VOLTAGE
0
200ms
-30V
(a)
T4
T3
BRIGHTNESS
T2
T1
(b)

FIG. 3

(a)

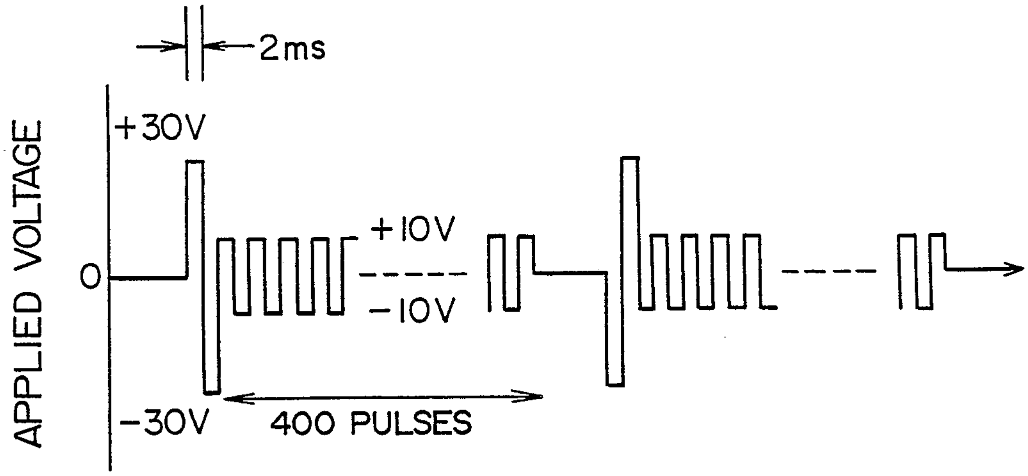
2ms
+30V
APPLIED VOLTAGE
0
+10V
-10V
-30V
400 PULSES

(b)

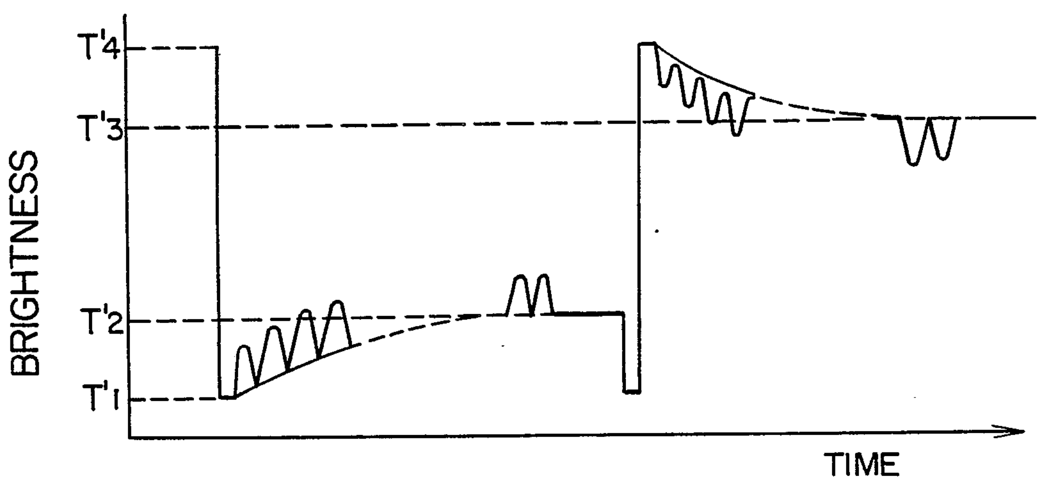
T'4
T'3
BRIGHTNESS
T'2
T'1
TIME

FIG. 4

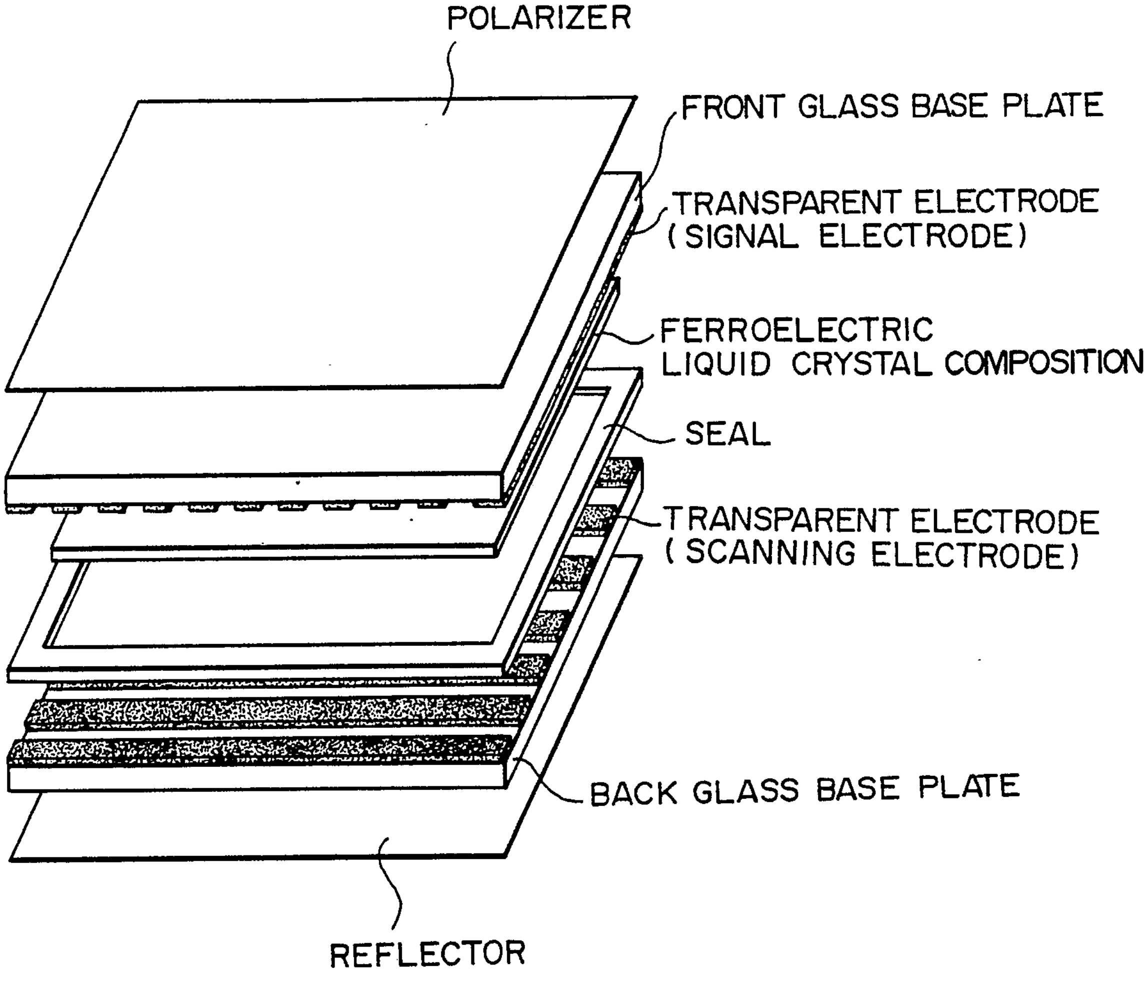
POLARIZER
FRONT GLASS BASE PLATE
TRANSPARENT ELECTRODE
(SIGNAL ELECTRODE)
FERROELECTRIC
LIQUID CRYSTAL COMPOSITION
SEAL
TRANSPARENT ELECTRODE
(SCANNING ELECTRODE)
BACK GLASS BASE PLATE
REFLECTOR